# EUROPEAN PATENT APPLICATION

(11) **EP 1 826 644 A2**
(43) Date of publication of application: **29.08.2007**
(21) Application number: 07102637.1
(22) Date of filing: 19.02.2007
(51) Int. Cl.: G05B 19/4155, G05B 19/406

(54) **Numerical controller**

(30) Priority: 22.02.2006 JP 2006044956
(71) Applicant: FANUC LTD, Minamitsuru-gun, Yamanashi 401-0597 (JP)
(72) Inventor: Hosokawa, Masahiko, FANUC Manshonharimomi, Minamitsuru-gun, Yamanashi 401-0511 (JP); Ide, Soichiro, Yamanashi 403-0004 (JP); Miyazaki, Takeshi, FANUC Manshonharimomi, Minamitsuru-gun, Yamanashi 401-0511 (JP)
(74) Representative: Billington, Lawrence Emlyn

(57) **Abstract**

A numerical controller capable of automatically determining performing/non-performing of specific miscellaneous functions. The specific miscellaneous functions to be performed only when they are called by a macro program are registered in advance. Each time when a macro program call command is read from a program, a call counter having an initial value of "0" is incremented by "1" and each time when a macro program return command is read from the program, the call counter is decremented by "1". When one of the registered specific miscellaneous function is commanded from the program, such specific miscellaneous function is performed if the value of the call counter has a positive value, and the specific miscellaneous function is inhibited from being performed if the value of the call counter has a value of "0". The specific miscellaneous function is commanded in a macro program taking an appropriate sequence of operations into account, and thus is properly performed. The command of the specific miscellaneous function without taking the appropriate sequence into account has a possibility of causing a malfunction of the machine when it is performed and thus is inhibited.

## Description

### BACKGROUND OF THE INVENTION

### 1. Field of the Invention

The present invention relates to a numerical controller for controlling various industrial machines such as a machine tool, an electric discharge machine and an injection molding machine, and particularly to a numerical controller having miscellaneous functions to be performed according to a program.

### 2. Description of Related Art

A numerical controller for controlling various industrial machines such as a machine tool, an electric discharge machine and an injection molding machine has a preparatory function (G-function) for determining modes of a machine and a control system, a miscellaneous function (M-function) for controlling operations of components of the machine or the control system, a tool function (T-function) for designating a tool and particulars regarding the designated tool, a feed function (F-function) for designating a feed speed of a tool, and a spindle function (S-function) for designating a rotation speed of the spindle, etc. In these functions, the miscellaneous function may include a specific function which is not used in an operation of the machine by an end user. A miscellaneous function for maintenance of a machine which has been prepared by a machine tool builder is an example of the specific miscellaneous function which is not used in an operation of the machine by an end user.

The specific miscellaneous function is provided for a machine tool builder to perform a control dedicated to a specific kind and arrangement of a machine. Specifically, the above-mentioned miscellaneous function for the machine maintenance is affected by arrangements inherent to the machine and is required to be performed in an appropriate predetermined sequence of operations of the machine. Therefore, the machine tool builder prepares a macro program taking the predetermined sequence into consideration. The macro program prepared by the machine tool builder comprises a group of commands like a sub-program registered in a memory so that the numerical controller performs an intended function, and is executed when called by a macro program call command. Thus, the macro program is prepared by the machine tool builder taking the predetermined sequence into account and the specific miscellaneous function (function for maintenance of the machine) is commanded to be performed in execution of the macro program.

However, the specific miscellaneous function may be commanded without taking account of the appropriate sequence of operations in a user program prepared by an end user of the machine. Thus, there arises a problem of malfunction of the machine when the specific miscellaneous function is commanded to be performed not in the appropriate sequence of operations.

There is known a method of not performing a miscellaneous function commended by a program by providing an external switch and preparing a macro program or a ladder program which makes the commanded miscellaneous function effective in an ON-state of the external switch and the commanded miscellaneous function ineffective in an OFF-state of the external switch. For example, according to an invention described in JP 3396302B, a miscellaneous function lock switch is provided and a command to perform a miscellaneous function by an NC program is ignored when the miscellaneous function lock switch has been turned ON in checking the NC program.

Besides, a method of inspecting a call command is known from JP 8-63218A. According to this method, a call code is searched in a program. If a call code is found in the program, a program called by the call code is searched in a memory. And if the called program does not exist in the memory, an erroneous code is used for the called program, or an error is found in usage of the code, an alarm with corresponding alarm content and a program in which the alarm occurs are displayed.

Further, there is known an invention in which data areas not allowing reading/writing are set respectively for a main program and a sub-program, and a command of reading/writing in the data area not allowing the reading/writing is inhibited, from JP 11-305807A.

If the specific miscellaneous function which requires to be commanded taking the predetermined sequence into account is inhibited since such miscellaneous function is not used by an end user, the provision of such miscellaneous function is made useless, however there arises a problem if such miscellaneous function is performed without regard to the predetermined sequence, an erroneous operation of the machine may occur. The provision of an external switch and a macro program or a ladder program for making a command of the miscellaneous function effective/ineffective according to ON/OFF state of the external switch requires considerable cost and labor for setting of the external switch and preparation of the program.

### SUMMARY OF THE INVENTION

The present invention provides a numerical controller capable of automatically determining whether a commanded specific miscellaneous function is to be performed or not.

A numerical controller of the present invention has miscellaneous functions to be performed according to a program. The numerical controller comprises: storage means storing registration of specific miscellaneous functions; discrimination means for discriminating a type of the program in execution when one of the registered specific miscellaneous functions is commanded in the program; and execution means for selectively performing/not performing the commanded specific miscellaneous function in dependence on the type of the program discriminated by the discrimination means.

The type of the program to be discriminated by the discrimination means may be a macro program or a program called by a macro program, and the execution means may perform the commanded specific miscellaneous function only when the program in execution is discriminated to be a macro program or a program called in a macro program.

The discrimination means may make an increment of a counter value each time when a macro program calling command is read from the program and may make a decrement of the counter value each time when a macro program return command is read from the program. In this case, the discrimination means discriminates the type of the program in execution based on the counter value when one of the registered specific miscellaneous functions is commanded in the program.

When the specific miscellaneous function is commanded in a macro program, it is regarded that the specific miscellaneous function is commanded in an appropriate sequence of operations of the machine and therefore the machine does not malfunction by performing the specific miscellaneous function. However, when the specific miscellaneous function is commanded not in execution of a macro program, the commanded miscellaneous function is not performed. The performing/non-performing of the commanded miscellaneous function is automatically determined in execution of the program, so that the possibility of malfunction of the machine is securely prevented with a low cost.

### BRIEF DESCRIPTION OF THE DRAWINGS

FIG. 1 is a block diagram of a numerical controller according to an embodiment of the present invention; and
FIG. 2 is a flowchart showing an algorism of processing for controlling performing/non-performing of a specific miscellaneous function.

### DETAILED DESCRIPTION

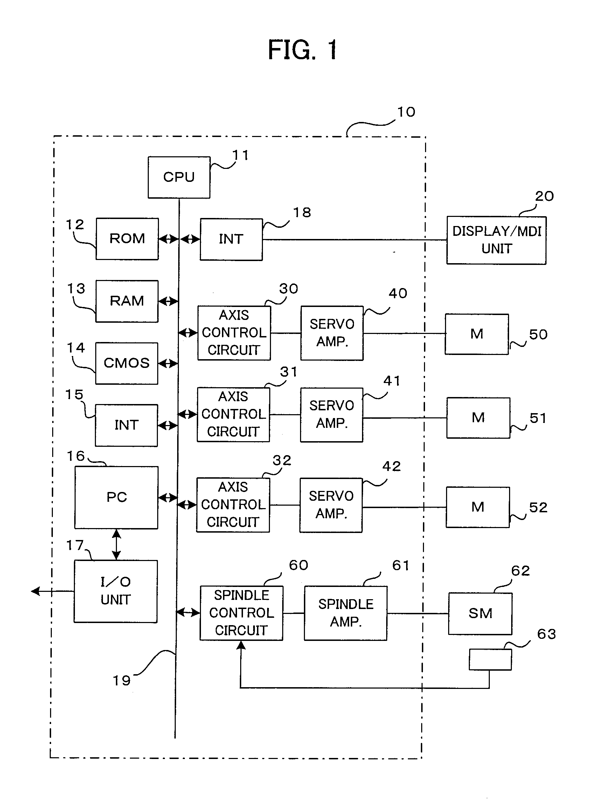

Referring to FIG. 1, a numerical controller 10 according to an embodiment of the present invention will be described in detail. A CPU 11 is a processor for generally controlling the numerical controller 10. The CPU 11 reads a system program stored in a ROM 12 via a bus 19, and controls the whole numerical controller according to the system program. A RAM 13 temporarily stores calculation data and display data, as well as various data inputted by an operator through a display/MDI (manual data input) unit 20. A CMOS memory 14 comprises a nonvolatile memory which is backed up by a battery, not shown, and thus can retain the contents stored therein even when the power supply to the numerical controller 10 is shut off. The CMOS memory 14 stores machining programs read via an interface 15 as well as machining programs inputted via the display/MDI unit 20.

The interface 15 permits an external device to be connected to the numerical controller 10. A PC (Programmable Controller) 16 outputs signals to auxiliary devices of the machine tool via an I/O unit 17 in accordance with a built-in sequence program of the numerical controller 10, to control the auxiliary devices. Also, the PC is supplied with signals from various switches etc. of an operation panel provided on the body of the machine tool, performs necessary processing on the signals, and transfers the processed signals to the CPU 11.

The display/MDI unit 20 is a manual data input device provided with a display such as a CRT or liquid crystal display, a keyboard, etc. An interface 18 transfers commands and data, inputted through the keyboard of the display/MDI unit 20, to the CPU 11.

Axis control circuits 30-32 receive motion commands for respective axes from the CPU 11 and output the commands to respective servo amplifiers 40-42. On receiving the commands, the servo amplifiers 40-42 drive servomotors 50-52 associated with the respective axes. Each of the servomotors 50-52 has built-in position and velocity detectors, and position and velocity feedback signals from the position and velocity detectors are fed back to the axis control circuit 30-32 to perform position/velocity feedback control. In FIG. 1, the elements related with the position/velocity feedback control are omitted.

A spindle control circuit 60 is supplied with a spindle rotation command and outputs a spindle velocity signal to a spindle amplifier 61. On receiving the spindle velocity signal, the spindle amplifier 61 causes a spindle motor 62 for rotating the spindle to rotate at the commanded velocity. A position coder 63 feeds a feedback pulse back to the spindle control circuit 60 in synchronism with rotation of the spindle, to perform velocity control.

The above hardware structure is substantially the same as that of a conventional numerical controller and the numerical controller of the present invention is provided with software means in combination with the hardware structure for determining whether or not a commanded specific miscellaneous function is to be performed in execution of a program.

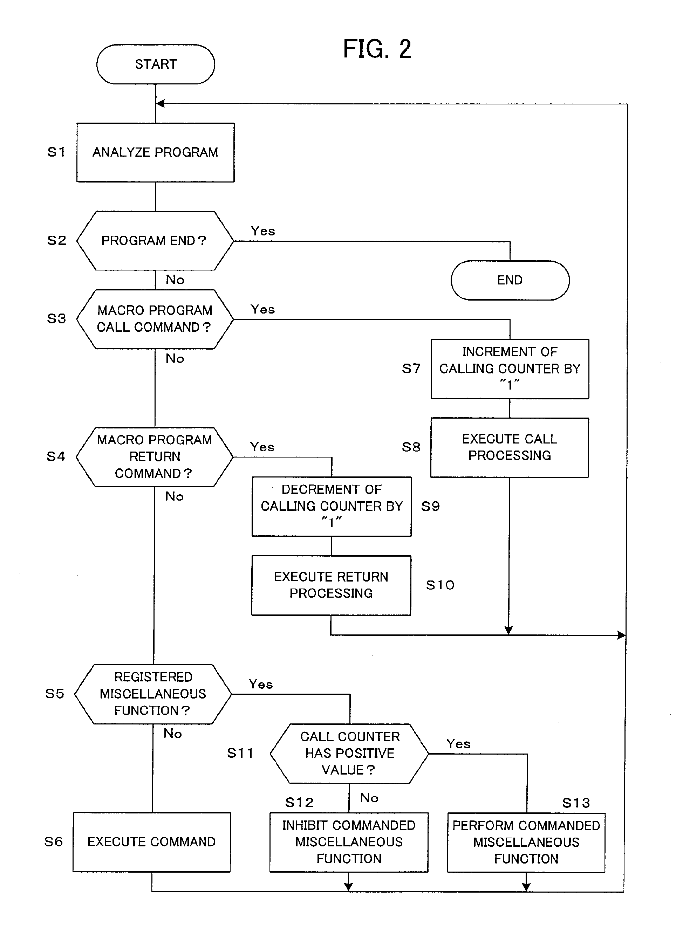

According to this embodiment, specific miscellaneous functions which should be performed only when they are commanded in a macro program prepared by a machine tool builder are set in a plurality of miscellaneous functions in advance and registration of the specific miscellaneous functions is stored in the CMOS memory 14. An algorism shown in FIG. 2 is executed when the numerical controller executes a machining program.

First, the CPU 11 reads and analyzes one block of the machining program (Step S 1), and determines whether or not a command in the read block is an end command of the program (Step S2), and when it is determined that the command is not the end command it is determined whether or not the command is a call command for calling a macro program (Step S3). If not, it is determined whether or not the read command is a return command of the macro program (Step S4). If the read command is not a return command, it is determined whether the command is a command for executing one of specific miscellaneous functions which have been registered in advance (Step S5). When the read command is determined not to be such command, the command is executed (Step S6) and the procedure returns to Step 1 where a next block is read and analyzed.

When it is determined that the read command is a call command of a macro program at Step S3, a call counter for counting the number of calls of a macro program is incrementally increased by "1" (Step S7) and the call command of the macro program is executed (Step S8). Then, the procedure returns to Step S1. The value of the call counter has been set to "0" by initial setting.

On the other hand, when the read command is a return command of the macro program, the procedure proceeds from Step S4 to Step S9 where the call counter is decremented by "1" and the processing of returning from the macro program to the main program (Step S10) and the procedure returns to Step S1.

Subsequently, each time when a call command of a macro program is read, the call counter is incremented by "1" and each time when a return command of the macro program is read, the call counter is decremented by "1". Thus, when another macro program is called from the called macro program, the value of the call counter increases by "1" successively and each time when a return command of the macro program is read the call counter decreased by "1", so that only when the call counter does not have a positive value but "0", the macro program is not in execution.

When it is determined that the read command is a command for performing one of the specific miscellaneous functions at Step S5, it is determined whether the value of the call counter is positive or not (Step S 11). If the call counter has a positive value, it is judged that a command for performing one of the specific miscellaneous functions is read during the execution of the macro program and the specific miscellaneous function is called in the appropriate sequence of operations, and thus the called miscellaneous function is allowed to be performed (Step S13).

On the other hand, when the value of the call counter is not positive but "0", it is judged that the miscellaneous function is read from a user program and not from the macro program such that there is possibility that the miscellaneous function is commanded without regarding the appropriate sequence of operations and thus the commanded miscellaneous function is inhibited not to be performed (Step S10). In this case, an alarm may be issued so as to indicate that the commanded miscellaneous function is not performed on a display screen of the display/MDI unit 20.

Then, the procedure returns to Step S1 and the processing of S1 and the subsequent Steps is performed and when an end command of the program is read, the procedure of the program is terminated.

As described, when one of the registered specific miscellaneous functions is commanded in execution of a macro program, the commanded specific miscellaneous function is performed, but when one of the registered specific miscellaneous functions is commanded not in execution of a macro program, the commanded specific miscellaneous function is not performed. In the macro program prepared by a machine tool builder, a specific miscellaneous function is commanded in an appropriate sequence of operations of the machine, and therefore, it is secured that the machine does not malfunction by performing the commanded specific miscellaneous function when the specific miscellaneous function is commanded in the macro program. On the other hand, if the specific miscellaneous function is commanded not in execution of the macro program, there is possibility that the specific miscellaneous function is commanded not in the appropriate sequence of operations of the machine to cause malfunction of the machine and thus the commanded specific miscellaneous function is exhibited not to be performed so as to prevent malfunction of the machine.

## Claims

1. A numerical controller having miscellaneous functions to be performed according to a program, comprising:
storage means storing registration of specific miscellaneous functions;
discrimination means for discriminating a type of the program in execution when one of the registered specific miscellaneous functions is commanded in the program; and
execution means for selectively performing/not performing the commanded specific miscellaneous function in dependence on the type of the program discriminated by said discrimination means.

2. A numerical controller according to claim 1, wherein the type of the program to be discriminated by said discrimination means is a macro program or a program called by a macro program, and said execution means performs the commanded specific miscellaneous function only when the program in execution is discriminated to be a macro program or a program called in a macro program.

3. A numerical controller according to claim 2, wherein said discrimination means makes an increment of a counter value each time when a macro program calling command is read from the program and makes a decrement of the counter value each time when a macro program return command is read from the program, and discriminates the type of the program in execution based on the counter value when one of the registered specific miscellaneous functions is commanded in the program.
